# EUROPÄISCHE PATENTSCHRIFT

(11) **EP 0 683 024 B1**
(45) Veröffentlichungstag und Bekanntmachung des Hinweises auf die Patenterteilung: **05.08.1998**
(21) Anmeldenummer: 95105467.5
(22) Anmeldetag: 11.04.1995
(51) Int. Cl.: B27N 5/00

(54) **Verfahren zum Herstellen von Formteilen**
Process for making shaped articles
Procédé de fabrication de corps moulés

(30) Priorität: 20.05.1994 DE 4417836
(43) Veröffentlichungstag der Anmeldung: 22.11.1995
(73) Patentinhaber: LIGNOTOCK GmbH, D-36205 Sontra (DE)
(72) Erfinder: Nicolay, Albert, Dr., D-37276 Meinhard-Neuerode (DE)
(74) Vertreter: Pfenning, Meinig & Partner

(56) Entgegenhaltungen:
- EP-A- 0 188 680
- DE-A- 1 453 411
- DE-A- 2 206 829
- DE-A- 2 845 117
- GB-A- 1 049 925
- US-A- 3 790 417

## Beschreibung

Die Erfindung betrifft ein Verfahren zum Herstellen von Formteilen gemäß Oberbegriff des Anspruches 1.

Mischungen aus Polypropylen und Holzpartikeln sind unter der Bezeichnung HMPP (**H**olz**m**ehl**p**oly**p**ropylen) in der Fachwelt bekannt. Dabei wird die Werkstoffmischung in Plattenform durch Extrudieren, gegebenenfalls mit zusätzlichem Kalandrieren, hergestellt, wobei die Wanddicke dieser Platten der Dicke des späteren Formteiles entspricht. Die HMPP-Platten werden durch Strahlungsbeheizung auf die Erweichungstemperatur des Polypropylens erwärmt, und danach mittels geeigneter Formgebungsvefahren, wie Vakuumtiefziehen, Verpressen in einem aus Patrize und Matrize bestehenden Werkzeug od.dgl., zum jeweils gewünschten Formteil ausgeformt. Die Werkzeugtemperaturen liegen dabei unter der Erweichungstemperatur des Polypropylens, so daß der Werkstoff während des Ausformens abkühlt und das Formteil dem Werkzeug formstabil entnommen werden kann.

Diese Verfahrensweise bei der Verformung von HMPP-Platten hat den Vorteil einer übersichtlichen und einfachen Fertigung. Diesem Vorteil stehen jedoch auch eine Reihe von Nachteilen gegenüber. So wird beispielsweise ein hoher Anteil des kostenintensiven Polypropylens benötigt, um die HMPP-Platten hinreichend fließfähig und damit verformbar zu machen. Nach dem Stand der Technik beträgt der Mindestanteil an Polypropylen mehr als 50 %. Dies ist nicht nur aus Kostengründen ein Nachteil, sondern beeinflußt auch die Formteileigenschaften negativ. Mit steigendem Holzpartikelanteil verbessert sich die Formstabilität der Formteile im Bereich höherer Temperaturen und iohre Sprödigkeit im Bereich tiefer Temperaturen nimmt ab. Eine Steigerung der Holzpartikelanteile im genannten Werkstoff wäre also nicht nur aus Kostengründen, sondern auch aus Gründen der Formteileigenschaften wünschenswert, scheitert aber daran, daß ein größerer Anteil an Holzpartikeln die Verformbarkeit der Platten so weit herabsetzt, daß kompliziert geformte Teile nicht mehr herstellbar sind.

Ein weiterer Nachteil bei den bekannten HMPP-Platten besteht darin, daß sie sich infolge ihrer dichten struktur und ihrer geringen Wärmeleitfähigkeit nur schwer durchgehend auf die Erweichungstemperatur des Polypropylens anwärmen lassen. Hierzu wird eine verhältnismäßig lange Anwärmzeit benötigt.

Die durch das Verformen von HMPP-Platten hergestellten Formteile finden im größeren Umfang Verwendung als Innenverkleidungsteile für Kraftfahrzeuge. Wegen ihrer geringen Wasseraufnahme infolge des hohen Bindemittelanteiles sind sie in diesem Anwendungsbereich trotz der großen Abhängigkeit ihrer mechanischen Kennwerte, insbesondere der Temperaturfestigkeit, eine Alternative zu entsprechenden Formteilen, z.B. aus Holzfasermatten, die mit einem relativ geringen Bindemittelanteil von unter 20 % durch Verformen eines Wirrfaservlieses und durch anschließendes Verpressen in einem heißen Preßwerkzeug ausgeformt werden. Derartige Formteile haben jedoch den großen Vorteil, daß sie bezüglich ihrer Festigkeitswerte weitgehend von der Temperatur unabhängig sind. Infolge ihres niedrigen Bindemittelgehaltes weisen sie andererseits schlechtere Kennwerte bezüglich der Wasseraufnahme auf. Bereits 1980 wurde ein Verfahren zur Herstellung von zu Formteilen verpreßbarem Plattenmaterial aus zellstoffhaltigem Material und mindestens einem thermoplastischen Bindemittel vorgeschlagen, wobei das zellstsoffhaltige Material und die thermoplastischen Bindemittel gemischt und die Mischung in erwärmtem Zustand zu Plattenmaterial geformt wird (DE-OS 28 45 117). Hierbei wird das zellstoffhaltige Material zu Faserstoff zerfasert und mit den thermoplastischen Bindemitteln gemischt. Aus der Mischung wird ein Vlies gebildet und das Vlies durch Einwirkung von Wärme und Druck zu Plattenmaterial verdichtet. Dieses Verfahren sollte in einfacher und kostengünstiger Weise die Herstellung von Plattenmaterial gestatten, das sich durch gute Homogenität und mechanische Eigenschaften auszeichnet und sich in einfacher Weise zu Formteilen hoher Qualität fertigpressen läßt. Es werden dabei bevorzugt als zellstoffhaltiges Material Abfälle aus Zellfaserwerkstoffen verwendet, durch Schnitzeln zerkleinert und durch trockenes Mahlen zerfasert und thermoplastische Bindemittel in Form von trockenem Pulver zugegeben.

Des weiteren ist es auch nach diesem Stand der Technik bekannt, der Mischung duroplastische Bindemittel zuzugeben, und zwar in Form von trockenem Pulver, wobei der Gewichtsanteil der duroplastischen Bindemittel vorzugsweise 3 bis 6 %, bezogen auf den gesamten Bindemittelanteil, beträgt.

Als thermoplastisches Bindemittel können Polyäthylene, Polypropylene, Polyamid od.dgl. eingesetzt werden, und zwar üblicherweise mit einem Gewichtsanteil von mehr als 40 %, vorzugsweise 50 bis 60 %, so daß der Gewichtsanteil des Faserstoffes höchstens gleich dem Gewichtsanteil des Bindemittels ist.

Diese Vorgehensweise gestattet es zwar, eine Reihe von Vorteilen der Faservliesmatten-Technologie auch auf die fertigungstechnisch vorteilhafte HMPP-Technologie zu übertragen, sie besitzt aber immer noch gravierende Nachteile, so daß auch 14 Jahre nach Bekanntwerden dieser Verfahrensweise bis heute kein diesbezügliches marktfähiges Produkt hergestellt werden konnte. Die wesentlichen Gründe hierfür lassen sich wie folgt zusammenfassen:

Es wird auch bei diesem Verfahren ein Anteil von 50 Gew.% und mehr an thermoplastischem Material benötigt. Die Formteile weisen bei Dichten von 0,8 g/cm³ bis 1,4 g/cm³ für entsprechende Formteile keine Luftdurchlässigkeit mehr auf, bereiten daher bei nachfolgenden Kaschierungen Schwierigkeiten.

Der Einbau duromerer Bindemittel - vorzugsweise in Pulverform - bezweckt eine Verbesserung der Formstabilität der Formteile bei Wärmebelastung. Tatsächlich sind die Anwärmzeiten der Platten vor dem Ausformen aber derart lang, daß das duromere Bindemittel bereits während des Anwärmens auspolymerisiert und damit für den Verbund unwirksam bleibt, die Halbzeugplatten federn beim Erwärmen auf Erweichungs-Temperatur auf, das Duromer reagiert in diesem Zustand aus und geht für die Verstärkung des Verbundes verloren.

Der große Anteil an thermoplastischen Bindemitteln, wobei in der Praxis aus Kostengründen und technischen Gründen insbesondere im Hinblick auf die Erweichungs-Temperatur beim Stand der Technik nur Polypropylen sinnvoll einsetzbar sind, erschwert ein nachfolgendes Kaschieren durch Trennwirkung zusätzlich, so daß nur das an sich vorteilhafte Kaschieren in einem Arbeitsgang mit der Ausformung möglich ist. Hierbei läßt sich aber die Kaschierung nicht um die Kantenkontur des Formteiles herumlegen, also umbiegen, so daß der Anwendungsbereich der Formteile stark begrenzt ist.

Bei der Verwendung von Fasern mit extrem geringem Wassergehalt, von dem der genannte Stand der Technik ausgeht, bereitet bereits das Erwärmen bei der Fertigung der Halbzeugplatten Schwierigkeiten, da ein Wärmetransport durch verdampfendes Wasser entfällt. Die Verfahrensweise, nach der die noch lose Fasermatte bei der Herstellung von einem gasförmigen Heizmedium durchströmt wird, ist zum einen aufwendig, zum anderen sind dabei Strömungsgeschwindigkeiten notwendig, die zum Ausblasen von Feinteilen aus der Matte führen. Bei der erneuten Anwärmung auf Erweichungs-Temperatur vor dem Ausformen der Halbzeugplatten mit den bisher eingesetzten Formpressen in üblicher Weise, d.h. vorzugsweise mit Strahlungswärme, dauert zu lange und macht die durometen Bindemittel unwirksam.

Insgesamt sind die Vorteile einer Vorgehensweise gemäß DE-OS 28 45 117 bei gleichem Investitionsaufwand gegenüber dem durch die HMPP-Technik geschaffenen Stand der Technik gering, so daß bis heute eine wirtschaftliche Nutzung nicht möglich war.

Der Erfindung liegt daher die Aufgabe zugrunde, ein Verfahren der eingangs beschriebenen Art vorzugeben, mit dem Formteile aus einem Werkstoffverbund von thermoplastischen Bindemitteln, Zellulose oder Lignozellulose und duromeren Anteilen gefertigt werden können, deren Festigkeitswerte gegenüber dem Stand der Technik weniger abhängig von der Umgebungstemperatur sind, die auf ganzer Fläche luftdurchlässig sind und die mit allen zum Stand der Technik gehörenden Verfahren kaschierfähig sind.

Diese Aufgabe wird erfindungsgemäß gelöst durch die im kennzeichnenden Teil des Anspruches 1 angegebenen Merkmale.

Dadurch, daß die Zellulose- und/oder Lignozellulosefasern vor der Fertigung mit dem vernetzendenBindemittel oberflächendeckend appretiert werden, wird sichergestellt, daß diese Bindemittel zumindst die Holzfasern selbst festigkeitssteigend verstärken und versteifen. Dadurch, daß die im ersten Schritt gering verdichtete Fasermatte als Zuschnitt oder bahnförmig in einem zweiten Verfahrensschritt auf mindestens die Anspringtemperatur der Faserappretur, vorzugsweise auf die Erweichungstemperatur des thermoplastischen Bindemittels, erwärmt und bereits vor der Ausformung zum Formteil auf dessen Dichte verdichtet und diesem Dichtezustand für die Dauer der Vernetzung der Faserappretur gehalten wird, ergibt sich der Vorteil, daß auch die Kreuzungspunkte der Holzfasern duromer gebunden werden. Die Verdichtung auf Formteildichte erhöht dabei die Anzahl dieser Faserüberkreuzungen, so daß innerhalb des Gesamtverbundes eine Art "räumliches Stützgitter" entsteht, das seine Stabilität auch in der Wärme beibehält und die anschließende Formgebung durch an sich bekannte Verfahren wesentlich erleichtert, so daß auch komplizierte Formgebungen ohne Mehraufwand möglich werden.

Das erfindungsgemäße Verdichten auf Formteildichte hat darüber hinaus zwei weitere Vorteile:
1. Die Durchwärmung ist im verdichteten Zustand gegenüber dem locker verbundenen Mattenzustand wesentlich verbessert.
2. Die durch das Verdichten erhaltene erhöhte Dichte der Fasermatte verhindert Klemm- und Schervorgänge beim Ausformen weitgehend. Im Zusammenwirken mit dem zugfesten Fasergerüst ergibt sich so eine erheblich verbesserte Verformungsfähigkeit, die es ermöglicht, den Anteil an thermoplastischen Bindemitteln zu reduzieren.

Somit wird es beispielsweise möglich, einen Verbund einzusetzen, der sich dadurch kennzeichet, daß das thermoplastische Bindemittel höchsten in einer Menge von 40 Gew.% bei der Fasermattenbildung zugegeben wird, daß die Fasermatte bei der Formteilfertigung auf eine Maximaldichte von 0,8 g/cm³ verdichtet wird, und daß als Fasern überwiegend Holzfasern mit einer Länge von 1 bis 10 mm verwendet werden, die mit 4 bis 8 % Phenolharz vor der Mattenbildung appretiert wurden. Ein aus diesem Werkstoff gefertigtes Formteil ist auf ganzer Fläche luftdurchlässig - infolge des erhöhten Anteils an Holzfasern und der genutzten Bindekraft des Duromers warmfest im Sine der produktüblichen Spezifikation und infolge der großen Oberflächenanteile der Holzfaser auch nachträglich gut kaschierbar.

Das Aufheizen des Mattenzuschnittes und das Verdichten auf Formteildichte kann in einfacher Weise zwischen zwei vorzugsweise ebenen antihaftungsbeschichteten Heizplatten erfolgen, die beispielsweise in einer einfachen Presse gegeneinander preßbar sind. Dabei ergab sich überraschend, daß die natürliche Feuchte der appretierten Holzfasern nicht stört. Analog zum Verpressen herkömmlicher Holzfasermatten zu Formteilen durch Dampfbildung wird für einen verbesserten Wärmetransport gesorgt, so daß Aufwärmzeiten von ca. 60 Sek. derzeit erreichbar sind. Mit beheiztenPreßplatten lassen sich auch in einfacher Weise Temperaturen von 220°C und mehr realisieren, die sich beim erfindungsgemäßen Vorgehen als optimal erwiesen haben.

Die Erhöhung der Holzfaseranteile und die Nutzung des duromeren Bindemittels zur Verfestigung der Fasern und zur Wärmestabilisierung des Fasergitters bei erfindungsgemäßem Vorgehen verbessern die Schlagzähigkeit der Formteile und erhöhen die Splittersicherheit bei tiefen Temperaturen, ein wesentlicher Beitrag zur Insassensicherung in Fahrzeugen beim Unfall.

Alle Prozentangaben beziehen sich auf Gewichtsprozente, bezogen auf das Mattengewicht atro, also ohne Feuchtegehalt. Nach der Durchwärmung der verdichtetenFasermatte kann diese wie bekannt in einem "kalten" Werkzeug, d.h. in einem Werkzeug, dessen Temperatur unter der der erwärmten Fasermatte liegt, durch Druckbeaufschlagung zum fertigen Formteil ausgeformt werden. Alle Vorteile des Kaltausformens, wie beispielsweise vereinfachte Werkzeuge und kürzere Taktzeiten, sind somit nutzbar.

Neben den beschriebenen Vorteilen erfindungsgemäßen Vorgehens, bleiben viele an sich bekannte Vorteile des bisherigen Standes der Technik nutzbar. Das thermoplastische Bindemittel kann zumindest teilweise in Faserform zugegeben werden. Im Gegensatz zu einer pulverförmigen Zugabe zum Mahlprozeß trockener Fasern nimmt das Bindemittel dann am Vliesbildungsprozeß teil, und es entsteht ein gut durchmischtes homogenes Faservlies. Oberflächenschichten, beispielsweise Kaschierungen, lassen sich wie bei der HMPP-Technologie beim Ausformen des Formteiles haftfest mit der Fasermatte im sogenannten "one-shot"-Verfahren verbinden.

Auch wärmebeständige Langfasern, d.h. Fasern einer Länge von mehr als 10 mm, die natürliche oder synthetische Fasern sein können, lassen sich in einer Menge von 5 bis 20 Gew.%, vorzugsweise 8 bis 10 Gew.% in den Faserverbund einarbeiten. Sie verbessern Schlagzähigkeit und Verformungsverhalten vor allem dann, wenn ihre guten Festigkeitseigenschaften dadurch voll ausgenutzt werden, daß sie bevorzugt im Außenschichtbereich der Matten angeordnet werden.

Erfindungsgemäß hergestellte Formteile enthalten weniger thermoplastische Bindemittel als HMPP-Platten. Bei einer Verfahrensweise, bei der mit einem Pressenhub gearbeitet wird, kann es daher vorteilhaft sein, wenn die zu kaschierende Oberfläche der Matte mit einer Schmelzkleberschicht - etwa in Form eines Vlieses oder einer Folie - versehen ist. Es läßt sich so mit Sicherheit eine einwandfreie Haftung der Kaschierung vorgeben.

Als Werkstoff kommen für die Faserverbundmatte alle geeigneten Faser- und Bindemittelarten in Betracht. Vorzugseise werden als thermoplastische Bindemittel Polypropylenfasern Verwendung finden und als Hauptfaser die Holzfaser. Das vernetzende Appreturmittel für die Fasern wird bevorzugt aus der Gruppe der Phenolharze gewählt. Je nach Faserart kann aber auch ein anderes Duromer, beispielsweise ein Polyurethan, zweckmäßig sein.

## Patentansprüche

1. Verfahren zum Herstellen von vorzugsweise gleiche Wanddicke aufweisenden Formteilen aus Mischungen von Zellulose- und/oder Lignozellulosefasern mit mehr als 20 Gew.% thermischen Bindemitteln durch Wärme- und Druckbeaufschlagung auf eine hieraus vorgefertigte Fasermatte, wobei in einem ersten Verfahrensschritt die Fasermatte als ebenes endloses Wirrfaservlies unter nur geringer Verdichtung des Faserverbundes vorverdichtet wird, wobei das Wirrfaservlies mindestens 2 Gew.% eines in der Wärme vernetzenden Bindemittels beigemischt enthält, dessen "Anspringtemperatur", d.h. diejenige Temperatur, bei der die Vernetzung beginnt, geringer ist als die Erweichungstemperatur des thermoplastischen Bindemittels,
dadurch **gekennzeichnet,**
daß die Zellulose- und/oder Lignozellulosefasern vor der Fertigung des Faserverbundes mit dem vernetzenden Bindemittel oberflächenbedeckend appretiert, die im ersten Schritt gering verdichtete Fasermatte als Zuschnitt oder bahnförmig in einem zweiten Verfahrensschritt auf mindestens die Anspringtemperatur der Faserappretur, dabei auf die Erweichungstemperatur des thermoplastischen Bindemittels, erwärmt und bereits vor der Ausformung zum Formteil auf dessen Dichte verdichtet und in diesem Dichtezustand für die Dauer der Vernetzung der Faserappretur gehalten wird, und
daß abschließend die endverdichtete, vorzugsweise ebene, auf Erweichungstemperatur des thermoplastischen Bindemittels erwärmte Fasermatte, wie an sich bekannt, in einem Preßwerkzeug, dessen Temperatur unter der der erwärmten Fasermatte liegt, durch Druckbeaufschlagung zum fertigen Formteil ausgeformt wird.

2. Verfahren nach Anspruch 1,
dadurch gekennzeichnet, daß das thermoplastische Bindemittel zumindest teilweise in Faserform zugegeben wird.

3. Verfahren nach Anspruch 1 und 2,
dadurch gekennzeichnet, daß beim Ausformen des Formteiles eine an sich beliebige Oberflächenschicht mit der Fasermatte haftfest verbunden wird.

4. Nach dem Verfahren gemäß Anspruch 1 hergestellte Fasermatte,
dadurch gekennzeichnet, daß die Fasermatte wärmebeständige Langfasern größerer Festigkeit in einer Menge von 5 bis 20 Gew.%, vorzugsweise 8 bis 10 Gew.%, gleichmäßig verteilt oder im Außenschichtbereich angereichert, enthält.

5. Nach dem Verfahren nach Anspruch 1 hergestellte Fasermatte,
dadurch gekennzeichnet, daß das thermoplastische Bindemittel höchstens in einer Menge von 40 Gew.% bei der Fasermattenbildung zugegeben ist, daß die Fasermatte eine Maximaldichte von 0,8 g/cm³ aufweist, und
daß als Fasern überwiegend Holzfasern mit einer Länge von 1 bis 10 mm enthalten sind, wobei die Fasern mit 4 bis 8 Gew.% Phenolharz vor der Mattenbildung appretiert sind.

6. Nach dem Verfahren nach Anspruch 1 hergestellte Fasermatte,
dadurch gekennzeichnet, daß zumindest eine Oberfläche der Fasermatte mit einer Schmelzkleberschicht - etwa in Form eines Vlieses oder einer Folie - versehen ist.

## Claims

1. Process for the manufacture of shaped objects of preferably even wall thickness of mixtures of cellulose and/or lignocellulose fibres with more than 20 %-by-weight thermal bonding agents by heat- or pressure-loading a therefrom prepared fibre mat, and in a first step of the process the fibre mat is pre-compressed as an even endless random fibre fleece under only slight compression of the fibre composite, and the random fibre fleece contains at least 2 %-by-weight of a bonding agent which bonds in the heat and the "activating temperature" of which, i.e. the temperature at which bonding commences, is lower than the softening temperature of the thermoplastic bonding agent, **characterised in that** the cellulose and/or lignocellulose fibres are prior to production of the fibre composite dressed so as to be surface covered by the bonding agent, the fibre mat which is in the first stage slightly compressed is heated as a cut to size or webshaped item in a second process stage to at least the activating temperature of the fibre dressing whilst being heated to the softening temperature of the thermoplastic bonding agent, and prior to moulding a shaped object compressed to its density and held in this state of density for the duration of bonding of the fibre dressing, and finally the finally compressed and preferably plain fibre mat, which has been heated to softening temperature of the thermoplastic bonding agent, is in a conventional manner moulded into a finished shaped object by pressurisation in a compression tool the temperature of which lies below that of the heated fibre mat.

2. Process according to Claim 1, **characterised in that** the thermoplastic bonding agent is at least partially added in a fibrous form.

3. Process according to Claim 1 and 2, **characterised in that** during moulding of the shaped object a random surface layer is adheringly joined to the fibre mat.

4. Fibre mat produced according to the process of Claim 1, **characterised in that** the fibre mat contains heat-resistant long fibres of high strength at a quantity between 5 and 20 %-by-weight, preferably between 8 and 10 %-by-weight, evenly distributed or enriched in the area of the outer layer.

5. Fibre mat produced according to the process of Claim 1, **characterised in that** the thermoplastic bonding agent is added at a maximum quantity of 40 %-by-weight during fibre-mat forming, that the fibre mat has a maximum density of 0.8 g/cm³, and the fibres are predominantly wood fibres of between 1 and 10 mm in length, and the fibres are prior to mat forming dressed with between 4 and 8 %-by-weight phenol resin.

6. Fibre mat produced according to the process of Claim 1, **characterised in that** at least one surface of the fibre mat is provided with a layer of thermoplastic adhesive, like a fleece or a foil.

## Revendications

1. Procédé pour la fabrication de pièces moulées possédant, de préférence, une épaisseur de paroi constante et formées par des mélanges de fibres de cellulose et/ou de fibres de lignocellulose comportant plus de 20 % en poids de liants thermiques, par application d'une chaleur et d'une pression à un mat de fibres préalablement formé à partir de ces matériaux, selon lequel, lors d'une première étape opératoire, on exécute une prédensification du mat formé de fibres sous la forme d'une nappe plane et sans fin de fibres disposées au hasard, moyennant une densification seulement faible du non tissé formé de fibres, la nappe de fibres disposée au hasard contenant au moins 2 % en poids d'un liant réticulant sous l'action de la chaleur, qui est mélangé en elle et dont "la température de lancement", c'est-à-dire la température à laquelle la réticulation commence, est inférieure à la température de ramollissement du liant thermoplastique,
caractérisé en ce
qu'on apprête, en recouvrant leur surface, les fibres de cellule et/ou ou les fibres de lignocellulose avant la fabrication du non tissé formé de fibres, que, lors d'une seconde étape opératoire, on chauffe le mat formé de fibres faiblement densifié lors de la première étape, en tant que coupe ou en forme de bande, au moins à la température de lancement des fibres, c'est-à-dire alors à la température de ramollissement du liant thermoplastique, et qu'on densifie le mat formé de fibres pour l'amener à sa densité, déjà avant le démoulage libérant la pièce moulée, et qu'on le maintient dans cet état de densité pendant la durée de la réticulation de l'apprêt des fibres, et
que pour terminer, on moule le mat formé de fibres, qui a été densifié à sa densité finale, est de préférence plat et est chauffé à la température de ramollissement du liant thermoplastique, comme cela est connu en soi dans un outil de pressage, dont la température est inférieure à celle du mat chauffé, formé de fibres, par application d'une pression pour obtenir la pièce moulée terminée.

2. Procédé selon la revendication 1, caractérisé en ce qu'on ajoute le liant thermoplastique au moins partiellement sous la forme de fibres.

3. Procédé selon les revendications 1 et 2, caractérisé en ce que lors du démoulage de la pièce moulée, on fixe une couche superficielle, en soi quelconque, au mat formé de fibres de manière qu'elle y adhère fermement.

4. Mat formé de fibres fabriqué conformément au procédé selon la revendication 1,
caractérisé en ce que le mat formé de fibres contient des fibres longues, qui sont résistantes à la chaleur et possèdent une solidité supérieure, en une quantité de 5 à 20 % en poids, de préférence de 8 à 10 % en poids, qui sont réparties uniformément ou sont concentrées dans la zone de la couche extérieure.

5. Mat formé de fibres fabriqué selon la revendication 1,
caractérisé en ce que le liant thermoplastique est ajouté au maximum en une quantité de 40 % en poids, lors de la formation du mat formé de fibres,
que le mat formé de fibres possède une densité maximale de 0,8 g/cm³, et
que les fibres sont constituées de façon prépondérante par des fibres de cellulose ayant une longueur de 1 à 10 mm, les fibres étant recouvertes d'un apprêt formé de 4 à 8 % en poids de résine phénolique avant la formation du mat.

6. Mat formé de fibres fabriqué conformément au procédé selon la revendication 1,
caractérisé en ce qu'au moins une surface du mat formé de fibres est pourvue d'une couche de colle fusible - approximativement sous la forme d'une nappe ou d'une feuille.
